# EUROPÄISCHE PATENTSCHRIFT

(11) **EP 0 491 909 B1**
(45) Veröffentlichungstag und Bekanntmachung des Hinweises auf die Patenterteilung: **16.02.1994**
(21) Anmeldenummer: 91912470.1
(22) Anmeldetag: 12.07.1991
(51) Int. Cl.: G01D 5/26, G01P 3/36

(54) **STEHWELLENINTERPOLATOR**
STATIONARY WAVE INTERPOLATOR
INTERPOLATEUR D'ONDE STATIONNAIRE

(30) Priorität: 13.07.1990 DD 342758
(43) Veröffentlichungstag der Anmeldung: 01.07.1992
(73) Patentinhaber: CARL ZEISS JENA GmbH, 07745 Jena (DE)
(72) Erfinder: CHOUR, Matthias, O-6900 Jena (DE); NETZEL, Mario, O-4205 Braunsbreda (DE)
(74) Vertreter: Geyer, Werner, Dr.-Ing.
(86) Internationale Anmeldenummer: EP9101311
(87) Internationale Veröffentlichungsnummer: WO9201207

(56) Entgegenhaltungen:
- EP-A- 0 132 143
- EP-A- 0 316 093
- US-A- 3 788 746
- US-A- 4 566 794

## Beschreibung

### Technisches Gebiet

Die Erfindung bezieht sich auf einen Stehwelleninterpolator, bei dem zwei Leitbahnen mit je einer Reihenschaltung aus einer Fotodiode, einem Hybridverstärker und einem Doppellochkern verbunden sind, bei dem die Fotodiode, die der ersten Leitbahn zugeordnet ist, zur Detektion der Modenabstandsfrequenz eines Lasers und die Fotodiode, die der zweiten Leitbahn zugeordnet ist, zur Detektion der Modenabstandsfrequenz plus/minus der Dopplerverschiebung von einem Interferometer vorgesehen sind, bei dem die erste Leitbahn mit einer Winkelrasterung belegt ist, die bei einem Ausgangswinkel beginnt und mit einem schrittweise wachsenden Rastermaß bei einem Endwinkel abschließt, und bei dem alle Bauelemente und Verbindungen auf einem Träger als dielektrischem Material angeordnet sind.

Die Erfindung ist in der gesamten Meßtechnik einsetzbar. Sie ist vorteilhafterweise Uberall dort besonders nutzbar, wo hohe Objektgeschwindigkeiten, beispielsweise rotatorische und translatorische Bewegungen an Ultraprözisionsbearbeitungsmaschinen, bei hohen inkrementalen Auflösungen auftreten.

### Stand der Technik

Alle bekannten Lösungen von Trägerfrequenzverfahren gestatten aufgrund der niedrigen Trägerfrequenz des Zeemann He-Ne-Lasers mit ca. 2 MHz bei hohen Interpolationsraten nur eine geringe Objektverschiebegeschwindigkeit, beispielsweise bei λ/256 ca. 50 mm/s. Somit sind Auflösungen von λ/1024 bei einer Objektverschiebegeschwindigkeit von 100 mm/s nicht realisierbar. Weiterhin bedeutet (wie in der US-A-3 788 746 dargelegt) eine Auflösungserhöhung durch eine Vervielfachung der Trögerfrequenz einen sehr hohen Schaltungsaufwand, wobei in schnellen Systemen keine Echtzeitverarbeitung möglich ist. Weiterhin sind Lösungen bekannt, bei denen Laufzeiteffekte (Verzögerungen) mit Richtungsumkehr des Objektives durch hysteresebedingte Regelabweichung der Phasenregelschleife auftreten, die nachteilig wirken. Damit ist eine Erhöhung der Auflösung in Echtzeitverarbeitung nicht möglich, da eine A/D-Signalumsetzzeit (Interpolation) nachteilig wirkt (serielle Datenauswertung).

### Darstellung der Erfindung

Der Erfindung liegt die Aufgabe zugrunde, einen Stehwelleninterpolator zu schaffen, mit dem in schnellen Systemen eine hohe Auflösung im Echtzeitbetrieb möglich ist (parallele Signalverarbeitung).

Erfindungsgemäß wird diese Aufgabe bei einem Stehwelleninterpolator der eingangs genannten Art dadurch gelöst, daß mehrere Doppelbalancemischer mit ihrem Referenzeingang an die erste Leitbahn geschaltet sind, daß der Referenzeingang eines ersten Doppelbalancemischers lokalisiert an die Stelle des Anfangswinkels der ersten Leitbahn geführt ist, daß die weiteren Doppelbalancemischer mit ihren Referenzeingängen lokalisiert im Abstand des wachsenden Rastermaßes bis zum Endwinkel an die erste Leiterbahn geschaltet sind, daß die Doppelbalancemischer mit ihrem Meßeingang an der zweiten Leiterbahn anliegen, und daß die Ausgänge der Doppelbalancemischer zur Auskopplung einer phasenbehafteten Dopplerfrequenz an einen digitalen Diskriminator gelegt sind. Hierdurch wird die Möglichkeit einer parallelen Auswertung z.B. über ASIC geschaffen. Bevorzugt sind die Doppelbalancemischer als übliche Hybridnetzwerke ausgefuhrt, die es gestatten, Differenzfrequenzen zweier Eingangsfrequenzen auszugeben.

Vorteilhafterweise ist das dielektrische Material ein Keramikwerkstoff.

In vorteilhafter Weiterbildung der Erfindung sind die Leitbahnen als kreisbogenförmige Streifenleiter ausgefuhrt, die entsprechend der Rasterung in Abschnitte geteilt sind. Bevorzugt wird auch Träger, der Kreisbogenform der Leitbahnen entsprechend, mit einem kreisbogenförmigen Querschnitt ausgebildet.

Vorteilhafterweise sollte die erste Leitbahn eine Länge aufweisen, die dem Wert λ/2 der Modenabstandsfrequenz entspricht.

Bei der Erfindung sind mindestens zwei Doppelbalancemischer vorzusehen, die mit ihren Referenzeingängen bei den Rastern an die erste Leitbahn gekoppelt sind und die den Winkeln 0° und 90° entsprechen. Besonders bevorzugt erfolgt jedoch die Ankopplung in Rastern, die Winkeln von 5,625° oder 11,25° äquivalent sind.

Eine weitere vorteilhafte Ausgestaltung der Erfindung besteht auch darin, daß die zweite Leitbahn als symmetrisches Streifenleiternetzwerk gestaltet ist.

Beim Betreiben der erfindungsgemäßen Anordnung detektiert die Fotodiode, die der ersten Leitbahn zugeordnet ist, eine von einem Laser stammende Modenabstandsfrequenz f₁; f₂. Die Fotodiode der zweiten Leiterbahn detektiert eine vom Interferometer irr Meßkanal zugefuhrte Modenabstandsfrequenz plus/minus der Dopplerverschiebung f₁; f₂ ± Δ f₂. Die Amplituden der Fotodiodenausgangssignale werden jeweils über die nachgeschalteten Hydridverstärker vergrößert, so daß die folgenden Doppellochkerne in Sättigung betrieben werden (Amplitudenstabilisierung). Die Stabilisierung kann auch durch einen Diodenkonstantstrom erzielt werden.

Die verstärkten und so stabilisierten Signale werden über die Leitbahnen den Doppelbalancemischern zugeführt, dort gemischt und danach als parallel verarbeitete Signale im Echtzeitbetrieb dem digitalen Diskriminator zur Auswertung zugefuhrt.

Vorteilhafterweise werden die Fotodioden als Avalanchedioden ausgeführt.

Die wesentlichen Vorteile der Erfindung bestehen darin, daß die Doppelbalancemischer exakt dem Phasenwinkel der sich auf der ersten Leiterbahn ausbildenden stehenden Welle zuzuordnen sind, wodurch in schnellen Systemen, insbesondere in Laser-Wegmeßsystemen, eine hohe Auflösung bei Echtzeitbetrieb möglich ist. Mit relativ einfachen Mitteln können schnelle Objektbewegungen erfaßt werden.

### Kurze Beschreibung der Zeichnungen

Ein bevorzugtes Ausführungsbeispiel der Erfindung wird in den Zeichnungen beispielshalber im Prinzip noch näher erläutert. Es zeigen:
**Fig. 1** ein Prinzipschaltbild für einen erfindungsgemäßen Stehwelleninterpolator, und
**Fig. 2** die Schaltung einer vorteilhaften Realisierung der Erfindung.

In den Zeichnungen bedeuten:
- 1: Doppelbalancemischer
- 3: erste Leitbahn
- 4: Träger
- 6: zweite Leitbahn
- 5, 13: Hybridverstärker
- 7, 14: Doppellochkerne
- 8: Widerstand
- 9, 15: Fotodioden
- 16, 17: Eingänge
- 18, 19, 20, 21: Ausgänge
- 22, 23, 24, 25: Referenzeingänge
- 26, 27, 28, 29: Meßeingänge
- 30 bis 58: elektrische Verbindungen
- 59: Phasendiskriminator
- φo, 1, 2 ... n: Interpolationswinkel
- f₁; f₂: Modenabstandsfrequenz
- f₁; f₂ ±Δ f₂: Modenabstandsfrequenz plus/minus Dopplerverschiebung
- A Quad B: Signalausgang für Rechnerkopplung
- vor, rück: Zählkette vorwärts, rückwärts

### Weg zur Ausführung der Erfindung

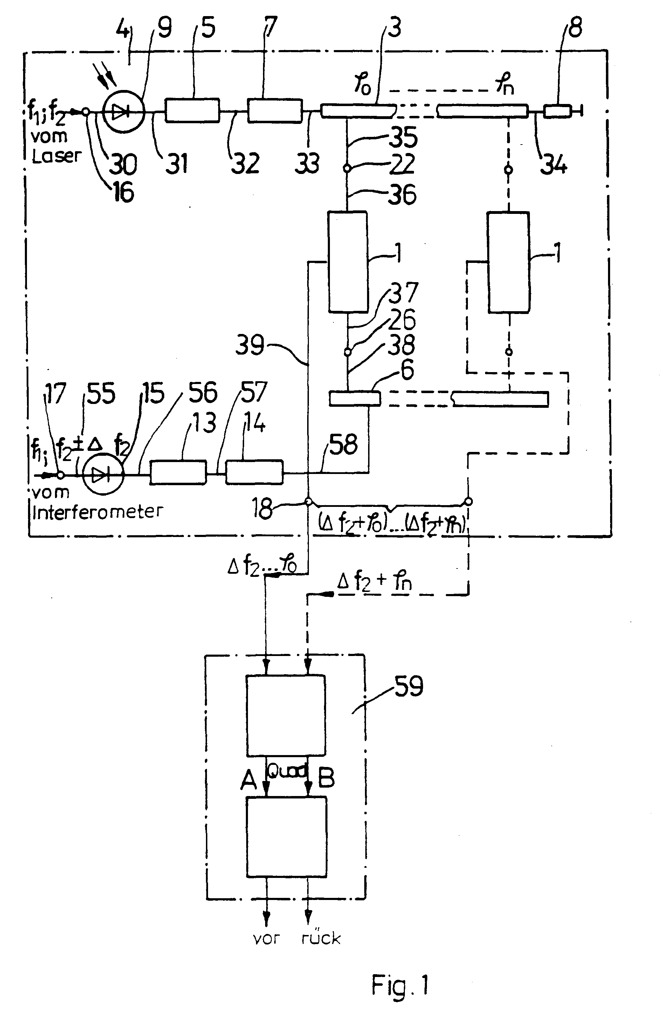

Das Prinzipschaltbild des erfindungsgemäßen Stehwelleninterpolators gemäß Fig. 1 umfaßt eine Reihenschaltung aus einer Fotodiode 9, einem Hybridverstärker 5 und einem Doppellochkern 7, dessen Ausgang über eine Leitung 33 mit einer ersten Leitbahn 3 verbunden ist, die mit ihrem anderen Ende über eine Leitung 34 und einen Widerstand 8 an Massepotential liegt.

Eine weitere Reihenschaltung aus einer Fotodiode 15, einem Hybridverstärker 13 und einem Doppellochkern 14 ist über eine Leitung 58 mit einer zweiten Leitbahn 6 verbunden. Die erste Leitbahn 3 ist in Winkelraster von φ₀ bis φₙ gerastert, wobei der Anfangswinkel φ₀ frei wählbar bzw. festlegbar ist. Mit einem schrittweise wachsendem Rastermaß in Teilschritten von Δφ schließt die Rasterung bei einem Endwinkel φₙ ab. Das Wachstum Δφ entspricht dem Winkel bzw. dem Abstand zwischen zwei benachbarten Rastern, z.B. φ₀ und φ₁.

Beide Leitbahnen 3, 6 können kreisbogenförmig (d.h. Krümmung mit endlichem Radius, senkrecht zur Zeichenebene) oder auch eben (d.h. Krümmung mit unendlichem Radius) ausgebildet sein. Analog ist ein Träger 4 aus dielektrischem Material, auf dem alle Bauelemente und Verbindungen angeordnet sind, mit einer entweder gekrümmten oder ebenen Außenfläche versehen, so daß er einen kreisbogenförmigen Querschnitt aufweist.

Die Leitbahnen 3, 6 sind durch mehrere parallel geschaltete Doppelbalancemischer 1 verbunden, deren Referenzeingänge 22 mit der ersten Leiterbahn 3 verbunden sind, wobei ein erster Doppelbalancemischer 1 mit seinem Eingang 22 beim Ausgangswinkel φₒ angekoppelt ist. Da mindestens zwei Doppelbalancemischer 1 zur Realisierung der Erfindung vorzusehen sind, ist der zweite Doppelbalancemischer 1 mit seinem Referenzeingang 22 an der Stelle φₙ anzukoppeln. Die Doppelbalancemischer 1 weisen ferner Meßeingänge 26, die mit der zweiten Leitbahn verbunden sind, sowie Ausgänge 18 auf, die an einem digitalen Diskriminator 59 anliegen, der aus einer Verknüpfung von sechzehn Komparatoren und EX-OR-Gattern besteht, an deren Ausgang die Signale A Quad B zur Verfügung stehen. Der A-Quad-B-Signalausgang kann als Schnittstelle für die Rechnerkopplung vorgesehen sein. Außerdem gibt der digitale Diskriminator 59 Zöhlketten aus für Vor-Rück-Zähler oder ähnliche Informationswändler, die den Meßwert ausgeben.

Mit der beschriebenen Schaltungsanordnung ist die praktische Ausführung der Erfindung dem Prinzip nach möglich.

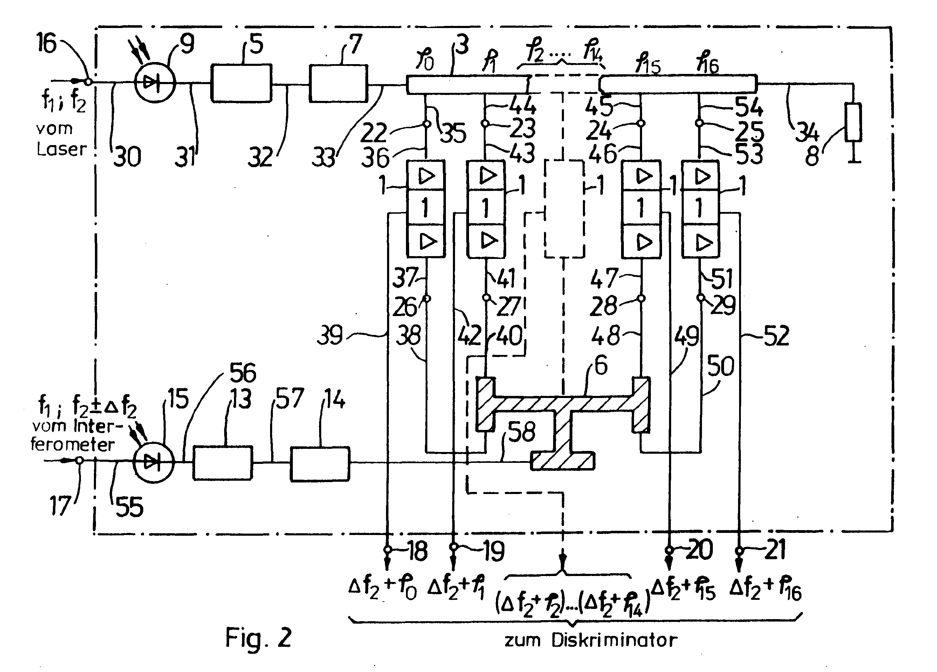

Fig. 2 zeigt die Erfindung in einer besonders vorteilhaften Ausführungsform. Hier sind die Leitbahnen 3, 6 durch sechzehn parallel geschaltete Doppelbalancemischer 1 verbunden. Entsprechend dieser Anzahl hat das Rastermaß auf der Leitbahn 3 bei φ₀ = 0° und φ₁₆ = 169,75° einen Betrag von Δφ = 11,25°. Die Leitbahn 3 ist als Streifenleitung mit einer Länge ausgeführt, die dem Wert λ/2 der Modenabstandsfrequenz f₁; f₂ des Lasers entspricht. Die zweite Leiterbahn 6 ist als symmetrisches Streifenleiternetzwerk gestaltet, mit dem die Meßeingänge 26, 27, 28, 29 der dargestellten sowie die weiteren Meßeingänge der in Fig. 2 nicht dargestellten Doppelbalancemischer 1 verbunden sind.

Beim Betreiben der Anordnung wird von der Fotodiode 9, die im gezeigten Beispiel als Avalancediode ausgeführt ist, eine vom Laser stammende Modenabstandsfrequenz f₁; f₂ detektiert, während die Fotodiode 15, hier ebenfalls eine Avalanchediode, die von einem Interferometer im Meßkanal kommende Modenabstandsfrequenz plus/minus Dopplerverschiebung f₁; f₂ ±Δ f₂ aufnimmt. Die Diodenvorspannungen sind so gewählt, daß beide Fotodioden 9, 15 im maximalen Bereich arbeiten. Die jeweils nachgeschalteten Hybridverstärker 5, 13 vergrößern die Signalamplitude, so daß die folgenden Doppellochkerne 7, 14 in Sättigung betrieben werden (Amplitudenregelung). Dadurch ist es möglich, daß die Laserdriftleistung um mindestens eine Größenordnung schwanken kann bzw. die Planspiegel in dem vorgelagerten Meßsystem im Gegensatz zur herkömmlichen Laserwegmeßsystemen stärker verkippt werden können.

Die verstärkten und geregelten Signale f₁; f₂ und f₁; f₂ ±Δf₂ werden über die Leiterbahnen 3, 6 den Doppelbalancemischern 1 zugefuhrt, wobei das Signal f₁; f₂ jeweils der Rasterung entsprechend an den Referenzeingängen 22, 23, 24, 25 der dargestellten und den weiteren Referenzeingängen der nicht dargestellten Doppelbalancemischer 1 anliegt und das Signal f₂; f₂ ±Δf₂ Uber die Leitbahn 6 die Meßeingänge der Doppelbalancemischer 1 erreicht. In den Doppelbalancemischern 1 werden die Signale gemischt.

In Abhängigkeit von der Verschiebung des Meßobjektes (Meßspiegel, in den Figuren nicht dargestellt) werden an den Ausgängen 18, 19, 20, 21 der dargestellten sowie den weiteren Ausgängen der in Figur 2 nicht dargestellten Doppelbalancemischer 1 sechzehn Signale von Δf₂ + φₒ bis Δ f₂ + φ₁₆ mit den entsprechenden Phasenverschiebungen parallel im Echtzeitbetrieb abgegriffen und dem digitalen Diskriminator 59 zur Auswertung zugefuhrt. Hier erfolgt die Ermittlung des Vorzeichens der Dopplerfrequenz ±Δ f₂ und die Bereitstellung vorzeichenrichtiger Zählketten.

Die Doppelbalancemischer 1 liefern ein gleichspannungsfreies Wechselsignal, das im Nullpunkt der Amplitude getriggert wird. Amplitudenstörungen, z.B. hervorgerufen durch Dejustage eines dem Stehwelleninterpolator vorgelagerten optischen Systems oder durch Meßspiegelkippung in diesem System, wirken nicht störend. Bei superschnellen und hochauflösenden Systemen ist die Regelung der Amplitude über ein zweites Gate der Dualgatetransistoren der Hybridverstärker 5, 13 angebracht. Bei Schwankungen des Nullpunkts des Doppelbalancemischers 1 während schneller Meßspiegelbewegungen sind gegebenenfalls nullpunktkorrigierende Auswerteschaltungen einzusetzen. Die Mischerausgangsfrequenz von null Hertz bei ruhendem Meßobjekt ist erlaubt. Eine Korrektur von nichtlinearen Laufzeitfehlern ist möglich durch Aufteilung der Dopplerfrequenz ±Δ f₂ in Intervalle und Variation des Teilerfaktors bei jedem Intervall.

## Patentansprüche

1. Stehwelleninterpolator, bei dem zwei Leiterbahnen (3, 6) mit je einer Reihenschaltung aus einer Fotodiode (9, 15), einem Hybridverstärker (5, 13) und einem Doppellochkern (7, 14) verbunden sind, bei dem die Fotodiode (9), die der ersten Leitbahn (3) zugeordnet ist, zur Detektion der Modenabstandsfrequenz eines Lasers und die Fotodiode (15), die der zweiten Leitbahn (6) zugeordnet ist, zur Detektion der Modenabstandsfrequenz plus/minus der Dopplerverschiebung von einem Interferometer vorgesehen sind, bei dem die erste Leitbahn (3) mit einer Winkelrasterung belegt ist, die bei einem Ausgangswinkel (φₒ) beginnt und mit einem schrittweise wachsenden Rastermaß bei einem Endwinkel (φₙ) abschließt und bei dem alle Bauelemente und Verbindungen auf einem Träger (4) aus dielektrischem Material angeordnet sind, **dadurch gekennzeichnet,** daß mehrere Doppelbalancemischer (1) mit ihrem Referenzzeiteingang (22) an die erste Leitbahn (3) geschaltet sind, daß der Referenzeingang (22) eines ersten Doppelbalancemischers (1) lokalisiert an die Stelle des Anfangswinkels (φₒ) der ersten Leitbahn (3) geführt ist, daß die weiteren Doppelbalancemischer (1) mit ihren Referenzeingängen im Abstand des wachsenden Rastermaßes bis zu einem Endwinkel (φₙ) an die erste Leitbahn (3) geschaltet sind, daß die Doppelbalancemischer (1) mit ihrem Meßeingang (26) an der zweiten Leitbahn (6) anliegen und daß die Ausgänge (18) der Doppelbalancemischer (1) zur Auskopplung einer phasenbehafteten Dopplerfrequenz an einem digitalen Diskriminator (59) anliegen.

2. Stehwelleninterpolator nach Anspruch 1, dadurch gekennzeichnet, daß als dielektrisches Material ein Keramikwerkstoff eingesetzt ist.

3. Stehwelleninterpolator nach Anspruch 1 oder 2, dadurch gekennzeichnet, daß die Leitbahnen (3, 6) als kreisbogenförmige Streifenleiter ausgeführt sind.

4. Stehwelleninterpolator nach Anspruch 3, dadurch gekennzeichnet, daß der Träger (4) einen kreisbogenförmigen Querschnitt aufweist.

5. Stehwelleninterpolator nach einem der Ansprüche 1 bis 4, dadurch gekennzeichnet, daß für die erste Leitbahn (3) eine Länge vorgesehen ist, die dem Wert λ/2 der Modenabstandsfrequenz entspricht.

6. Stehwelleninterpolator nach einem der Anspruche 1 bis 5, dadurch gekennzeichnet, daß die Fotodioden (9, 15) als Avalanchedioden ausgeführt sind.

7. Stehwelleninterpolator nach einem der Ansprüche 1 bis 6, dadurch gekennzeichnet, daß die zweite Leitbahn (6) als symmetrisches Streifenleiternetzwerk gestaltet ist.

8. Stehwelleninterpolator nach einem der Ansprüche 1 bis 7, dadurch gekenn zeichnet, daß die Doppelbalancemischer (1) aus ausgemessenen Hybridbausteinen bestehen.

## Claims

1. Standing wave interpolator, in which two conductors (3, 6) are connected to in each case one series connection of a photodiode (9, 15), a hybrid amplifier (5, 13) and a double punched core (7, 14), in which the photodiode (9) which is associated with the first conductor (3) is used for the detection of the mode spacing frequency of a laser and the photodiode (15) associated with the second conductor (6) is used for the detection of the mode spacing frequency plus/minus the Doppler shift of an interferometer, in which the first conductor (3) is provided with an angle gird, which starts at a starting angle (φₒ) and with a stepwise increasing grid measurement terminates at an end angle (φₙ) and in which all the components and connections are placed on a carrier (4) made from dielectric material, characterized in that several double balance mixers (1) are connected by their reference input (22) to the first conductor (3), that the reference input (22) of a first double balance mixer (1) is located at the point of the starting angle (φₒ) of the first conductor (3), that the further double balance mixers (1) with their reference inputs positioned spaced from the increasing grid measurement up to the end angle (φₙ) are connected to the first conductor (3), that the double balance mixers (1) with their measurement input (26) are applied to the second conductor (6) and that the outputs (18) of the double balance mixers (1) are applied to a digital discriminator (59) for coupling out a phase-shifted Doppler frequency.

2. Standing wave interpolator according to claim 1, characterized in that a ceramic material is used as the dielectric material.

3. Standing wave interpolator according to claim 1 or 2, characterized in that the conductors (3, 6) are in the form of arcuate conductive strips.

4. Standing wave interpolator according to claim 3, characterized in that the carrier (4) has an arcuate cross-section.

5. Standing wave interpolator according to one of the claims 1 to 4, characterized in that the first conductor (3) has a length corresponding to the mode spacing frequency value λ/2.

6. Standing wave interpolator according to one of the claims 1 to 5, characterized in that the photodiodes (9, 15) are in the form of avalanche diodes.

7. Standing wave interpolator according to one of the claims 1 to 6, characterized in that the second conductor (6) is in the form of a symmetrical conductive strip network.

8. Standing wave interpolator according to one of the claims 1 to 7, characterized in that the double balance mixers (1) comprise measured out hybrid components.

## Revendications

1. Interpolateur d'onde stationnaire dans lequel deux pistes conductrices (3, 6) sont reliées chacune à un montage en série constitué d'un photodiode (9, 15), d'un amplificateur hybride (5, 13) et d'un double noyau perforé (7, 14), dans lequel la photodiode (9) qui est associée à la première piste conductrice (3) est prévue pour la détection de la fréquence de la distance de mode d'un laser et la photodiode (15), qui est associée à la seconde piste conductrice (6), est prévue pour la détection de la fréquence de distance de modes plus/moins le déplacement Doppler d'un interféromètre, dans lequel la première piste conductrice (3) est occupée par une échelle angulaire qui commence à un angle de sortie (φo) et qui avec une dimension de trame croissant progressivement se termine à un angle final (φ n) et dans lequel tous les composants et liaisons se trouvent sur un support (4) en matériau diélectrique, caractérisé en ce que plusieurs doubles mixeurs de balance (1) sont raccordés avec leur entrée de temps de référence (22) à la première piste conductrice (3), en ce que l'entrée de référence (22) d'un premier double mixeur de balance (1) est guidée localisée l'endroit de l'angle initial (φₒ) de la première piste conductrice (3), en ce que les autres doubles mixeurs de balance (1) avec leurs entrées de référence à la distance de la dimension de trame croissante jusqu'à un angle final (φₙ) sont connectés à la première piste conductrice (3), en ce que les doubles mixeurs de balance (1) avec leur entrée de mesure (26) s'appliquent contre la deuxième piste conductrice (6) et en ce que les sorties (18) des doubles mixeurs de balance (1) s'appliquent à un discriminateur (59) numérique, pour le découplage d'une fréquence Doppler déphasé.

2. Interpolateur d'onde stationnaire selon la revendication 1, caractérisé en ce qu'on utilise comme matériau diélectrique un matériau céramique.

3. Interpolateur d'onde stationnaire selon les revendications 1 ou 2, caractérisé en ce que les pistes conductrices (3, 6) sont réalisées sous la forme de conducteurs en bande en arc de cercle.

4. Interpolateur d'onde stationnaire selon la revendication 3, caractérisé en ce que le support (4) présente une section transversale en arc de cercle.

5. Interpolateur d'onde stationnaire selon l'une des revendications 1 à 4, caractérisé en ce que pour la première piste conductrice (3) il est prévu une longueur qui correspond à la valeur λ/2 de la fréquence de distance de modes.

6. Interpolateur d'onde stationnaire selon l'une des revendications 1 à 5, caractérisé en ce que les photodiodes (9, 15) sont des diodes à avalanche.

7. Interpolateur d'onde stationnaire selon l'une des revendications 1 à 6, caractérisé en ce que la deuxième piste conductrice (6) est un réseau de conducteurs en bande.

8. Interpolateur d'onde stationnaire selon l'une des revendications 1 à 7, caractérisé en ce que les doubles mixeurs de balance (1) sont des composants hybrides mesurés.
